# EUROPÄISCHE PATENTANMELDUNG

(11) **EP 2 383 417 A2**
(43) Veröffentlichungstag der Anmeldung: **02.11.2011**
(21) Anmeldenummer: 11003436.0
(22) Anmeldetag: 27.04.2011
(51) Int. Cl.: E06B 9/76

(54) **Getriebe für Rollläden oder dergleichen**

(30) Priorität: 27.04.2010 DE 102010018592
(71) Anmelder: Gerhard Geiger GmbH & Co., 74303 Bietigheim-Bissingen (DE)
(72) Erfinder:
(74) Vertreter: Jeck, Anton

(57) **Zusammenfassung**

Die Erfindung betrifft ein Getriebe insbesondere ein Untersetzungsgetriebe (1) für Rollläden und dergleichen, das als in einem Sandwich-Gehäuse (2) angeordneten Schneckenrad- oder Kegelradgetriebe ausgebildet und seitlich innen in einem Rollladenkasten angebracht ist und das ferner mit einem eine Bremsschraubenfeder (13) aufweisenden Bremseinheit (10) und einer eine Überlastschraubenfeder (24) aufweisende Überlastrutschkupplung (11) zusammenarbeitet. Die Erfindung besteht darin, dass die Bremsschraubenfeder (13) zwei- oder mehrstufig ausgebildet ist. Dadurch kann das Bremsmoment in AUF- und AB-Richtung des Rollladenbehangs unterschiedlich eingestellt werden.

## Beschreibung

### Getriebe

Die Erfindung betrifft ein Getriebe gemäß dem Oberbegriff des Anspruchs 1, das vorzugsweise zum mechanischen Antrieb für Rollläden und dergleichen eingesetzt wird.

Solche Untersetzungsgetriebe werden vorzugsweise in Rollladenkästen an der Antriebswelle des Rollladens und seitlich innen im Rollladenkasten montiert sowie vorzugsweise über eine Handkurbel angetrieben. Als Besonderheit sind diese Getriebe im Antriebsstrang mit einer Überlastkupplung ausgestattet, die den Rollladen vor Beschädigungen schützen soll, sobald der Rollladen in die Drehrichtung "AB" ganz abgelassen ist und versehentlich weitergekurbelt wird. Die Überlastkupplung muss deshalb schon bei einem geringen Überlastmoment ansprechen, bevor der Rollladen Schaden nimmt. Wird der Rollladen in die Drehrichtung "AUF" nach oben gekurbelt, muss die Überlastkupplung mindestens das zulässige Nennmoment des Getriebes antreiben können ohne durchzurutschen. Das Überlastmoment in AB-Richtung muss folglich wesentlich kleiner als in AUF-Richtung sein. Somit müssen solche Getriebe drehrichtungsgebunden in den Rollladen eingebaut werden.

Durch die EP 1201951 A1 ist eine ähnliche Ausführung dieses Untersetzungsgetriebes gemäß dem Oberbegriff des Anspruchs 1 bereits bekannt, allerdings bilden hier die Bremseinheit und die Überlastkupplung eine Einheit. Diese Einheit ist im Antriebsweg zwischen der Handkurbel und dem Untersetzungsgetriebe angeordnet.

Die bekannten Getriebe lassen kein unterschiedliches Bremsmoment in AUF- oder AB-Richtung zu.

Die Aufgabe der Erfindung besteht daher darin, ein Getriebe, insbesondere ein Untersetzungsgetriebe der im Oberbegriff des Anspruchs 1 genannten Art zu schaffen, das einen Betrieb mit variablem Bremsmoment erlaubt, nämlich eine unterschiedliche, dem Bedarf angepasste Einstellung der Drehmomente in Auf- und AB-Richtung zulässt, um eine möglichst geringe Bedienkraft in AUF-Richtung und ein größeres Bremsmoment in AB-Richtung zu erreichen, das ferner eine trotz enger Platzverhältnisse stabile Ausführung ermöglicht und dessen Herstellungskosten gering sind.

Diese Aufgabe wird mit den Merkmalen des Anspruchs 1 gelöst.

Gemäß der Erfindung ist die Bremsschraubenfeder zwei oder mehrstufig ausgestaltet, so dass die aus einem Draht gewickelte Bremsschraubenfeder nach einer bestimmten Anzahl von Windungen in einen größeren oder kleineren Durchmesser übergeht (beliebig fortsetzbar), wodurch ein gleichzeitiges bzw. abwechselndes Bremsen im inneren Bereich der Bremsschraubenfeder (kleinerer Durchmesser) als auch im äußeren Bereich (größerer Durchmesser) möglich ist. Diese Ausgestaltung der Bremsschraubenfeder erlaubt auch eine unterschiedliche Einstellung der Kraftstufen.

Gemäß dieser Ausgestaltung des Untersetzungsgetriebes ist eine einfachere und somit kostengünstigere Montage möglich. Ferner ist eine direktere und ruckfreiere Kraftübertragung möglich. Auch ist es möglich, das Untersetzungsgetriebe als Schneckenradgetriebe, Kegelradgetriebe oder dergleichen auszugestalten.

Gemäß einer weiteren Ausbildung der Erfindung weist die Bremsschraubenfeder einen Abschnitt mit großem Außendurchmesser und großem Innendurchmesser sowie einen Abschnitt mit kleinem Außendurchmesser und kleinem Innendurchmesser auf..

Gemäß einer weiteren Ausbildung der Erfindung besteht die Bremseinheit aus einer mit einem Ende des Schnecken- oder Kegelrads kuppelbaren Bremszylinder, der auf diesem angeordneten Bremsschraubenfeder und einer mit dem Gehäuse kuppelbaren Bremshülse, wobei eine erste Fläche des Bremszylinders an den kleinen Innendurchmesser und eine erste Fläche der Bremshülse an den großen Au-βendurchmesser angepasst ist.

Gemäß einer weiteren, einfachen Ausbildung der Erfindung besteht die Kupplung des Bremszylinders mit dem Schnecken- oder Kegelrad aus zwei gegenüberliegenden Vorsprüngen am Schnecken- oder Kegelrad und aus zwei gegenüberliegenden Ausnehmungen am Bremszylinder..

Gemäß einer weiteren, einfachen Ausbildung der Erfindung besteht die Kupplung der Bremshülse mit dem Gehäuse aus zwei gegenüberliegenden Vorsprüngen des Gehäuses und zwei gegenüberliegenden Ausnehmungen der Bremshülse.

Gemäß einer weiteren Ausbildung der Erfindung ist die Überlastkupplung am anderen Ende des Schecken- oder Kegelrads angeordnet. Dadurch entsteht eine kompakte Anordnung im Gehäuse des Untersetzungsgetriebes. ist.

Gemäß einer weiteren Ausbildung der Erfindung besteht die Überlastkupplung aus einer mit dem anderen Ende des Schnecken- oder Kegelrads kuppelbaren zweiten Hülse, der auf dieser Hülse sitzenden Überlastschraubenfeder und einer mit der Überlastschraubenfeder kuppelbaren Antriebshülse, in die eine Handkurbel eingreift.

Gemäß einer weiteren Ausbildung der Erfindung ist die Überlastschraubenfeder wie die Bremsschraubenfeder zweistufig ausgebildet. Dadurch ist es möglich, ein Rutschmoment in beiden Drehrichtungen mit jeweils unterschiedlichem Auslösemoment zu erzeugen.

Die mit der Erfindung zu erreichenden Vorteile sind:
- eine stabile Bauweise, wodurch höhere Drehmomente möglich sind,
- eine einfache, kostenverminderte Montage,
- eine direkte, ruckfreie Kraftübertragung, so dass eine komfortable Bedienung des Rollladens ermöglicht wird,
- eine kostengünstige Herstellung der Bremsfeder,
- eine einfache und schnelle Montage und
- Schutz der Komponenten des Rollladens und der Getriebeanschläge durch ruhigeren Lauf des Getriebes.

Die Erfindung wird nun anhand eines Ausführungsbeispiels näher erläutert. Es zeigen:
- Fig. 1: eine perspektivische Explosionsansicht der kompletten Bauteile eines Untersetzungsgetriebes gemäß der Erfindung,

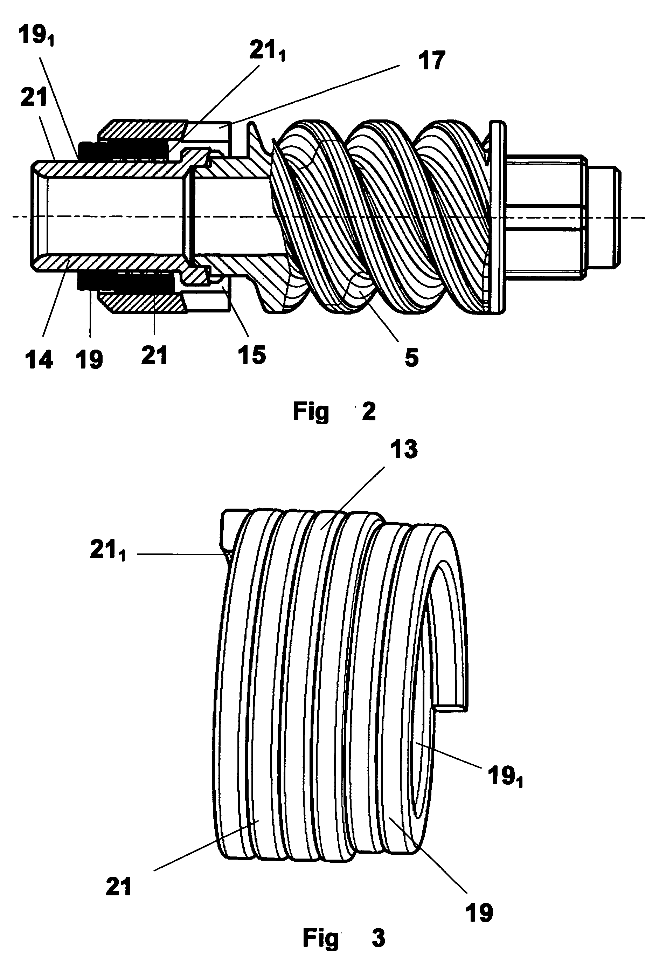

- Fig. 2: einen Schnitt durch eine Schnecke mit Bremseinheit, die eine zweistufige Bremsschraubenfeder aufweist, und
- Fig. 3: eine perspektivische Ansicht einer zweistufigen Bremsschraubenfeder.

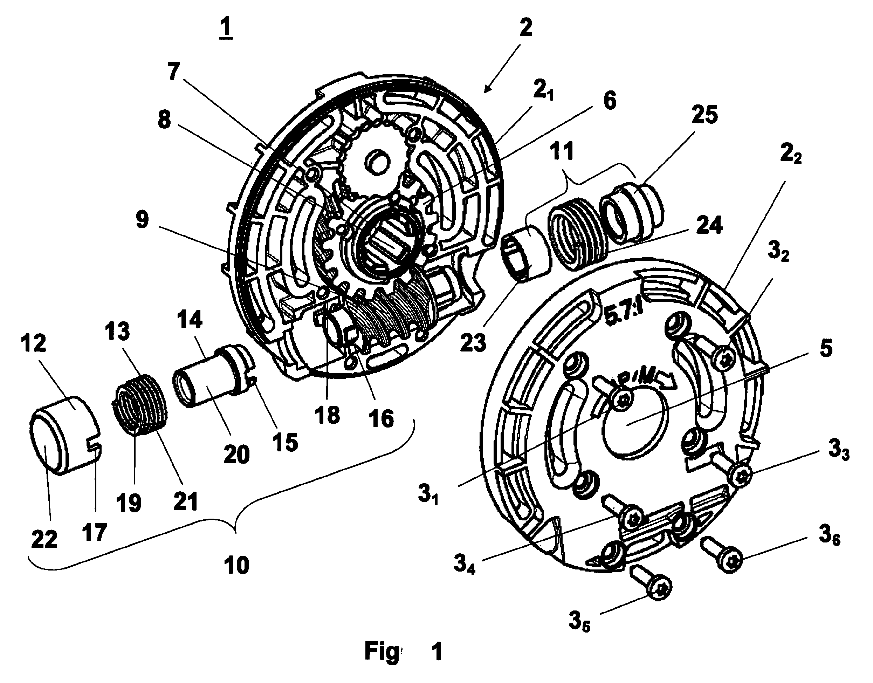

In Fig. 1 ist ein Untersetzungsgetriebe in Form eines Schneckenradgetriebes 1 dargestellt, dessen Gehäuse 2 in Sandwich-Bauweise aus zwei runden Gehäusehälften besteht. Die beiden Gehäusehälften 2₁, 2₂ sind mittels vier Schrauben 3₁-3₆ miteinander verbindbar.

In jeder Gehäusehälfte 2₁, 2₂ ist eine zentrale, runde Öffnung, wie die Öffnung 5, vorgesehen. Zwischen den Öffnungen 5 ist ein Schneckenrad 6 drehbar gelagert. Dieses Zahnrad 6 ist mit einer zentralen Öffnung 7 ausgestattet, in der eine Innenverzahnung 8 angeordnet ist. Die Innenverzahnung 8 greift in nicht dargestellter Weise in Längsrillen einer Antriebswelle der Wickelwelle des Rollladens ein, die den Rollladenbehang trägt.

Das Schneckenrad 6 greift auch in eine Schnecke 9 ein, die ebenfalls zwischen den Gehäusehälften 2₁, 2₂ drehbar gelagert ist.

Das bis hierhin beschriebene Schneckenradgetriebe 1 ist bekannt und beispielsweise in der EP 1201951 A1 beschrieben.

Die besondere Wirkungsweise und Bauart der Bremse sowie der Überlastkupplung gemäß der Erfindung sind folgende.

Um eine stabilere Bauweise und damit höhere Drehmomente zu erreichen, ohne mehr Platz im Untersetzungsgetriebe zu benötigen, wird hier die Bremseinheit 10 von der Überlastkupplung 11 getrennt.

Die Bremseinheit 10 besteht aus einer Bremshülse 12, einer zweistufigen Bremsschraubenfeder 13 und einem Bremszylinder 14.

Der Bremszylinder 14 ist formschlüssig mit der Schnecke 9 verbunden, z.B. mit zwei gegenüberliegenden Ausnehmungen, wie der in Fig. 1 dargestellten Ausnehmung 15, am Bremszylinder 14 und darin eingreifenden Vorsprüngen 16 der Schnecke 9.

Die Bremshülse 12 ist formschlüssig mit dem Gehäuse 2 verbunden, z.B. mittels zwei gegenüberliegenden Ausnehmungen, wie der in Fig.1 dargestellten Ausnehmung 17, in der Bremshülse 12 und gegenüberliegenden Vorsprüngen 18 des Gehäuses 2.

Die Bremsschraubenfeder 13 weist einen Abschnitt mit großem Außendurchmesser 21 und großem Innendurchmesser 21₁ sowie einen Abschnitt mit kleinem Außendurchmesser 19 und kleinem Innendurchmesser 19₁ auf.

Die zweistufige Bremsschraubenfeder 13 ist kraftschlüssig mit dem Bremszylinder 14 und der Bremshülse 12 verbunden. Der Kraftschluss ist durch die Vorspannung der Bremsschraubenfeder 13 auf dem Bremszylinder 14 und der Bremshülse 12 unterschiedlich einstellbar.

Beim Betätigen des Behangs (des Rollladens, der Markise usw.) in AUF-Richtung zieht sich die zweistufige Bremsschraubenfeder 13 zusammen. Somit geht diese mit ihrem kleinen Innendurchmesser 19₁ einen Kraftschluss mit einer ersten Fläche 20 des Bremszylinders 14 ein; sie bildet somit das höhere Drehmoment, das es erlaubt, den Behang in AUF-Richtung zu drehen. Gleichzeitig entfernt sich der große Außendurchmesser 21 der Bremsschraubenfeder 13 von einer ersten Fläche 22 der Bremshülse 12.

Beim Betätigen des Behangs in AB-Richtung dehnt sich die zweistufige Bremsschraubenfeder 13 auseinander und bildet somit am großen Außendurchmesser 21 der Bremsschraubenfeder 13 einen Reibschluss mit der ersten Fläche 22 der Bremshülse 12, womit eine ruckelfreie, kontrollierbare Abwärtsbewegung des Behangs ermöglicht wird. Gleichzeitig entfernt sich der kleine Innendurchmesser 19₁ der Bremsschraubenfeder 13 von der ersten Fläche 20 des Bremszylinders 14.

Die unterschiedlichen Drehmomente können durch die Anzahl der Wicklungen je Durchmesser und der Vorspannung der Situation angepasst werden.

Die Überlastkupplung 11 ist als Überlastrutschkupplung ausgebildet und am anderen Ende der Schnecke 9 angeordnet. Die Überlastkupplung 11 besteht aus einer mit dem anderen Ende der Schnecke 9 kuppelbaren zweiten Hülse 23, einer auf dieser Hülse sitzenden Überlastschraubenfeder 24 und einer mit der Überlastschraubenfeder 24 kuppelbaren Antriebshülse 25, in die eine nicht dargestellte Handkurbel eingreift.

Die Überlastschraubenfeder 24 ist so eingestellt, dass sie das für die Betätigung des Behangs erforderliche Drehmoment auf die Schnecke 9 überträgt, aber bei einem höheren Drehmoment in AUF- und AB-Richtung, wie es beim Weiterdrehen der Wickelwelle in den Endstellungen des Behangs vorkommt, durchrutscht. Die Überlastschraubenfeder 24 kann wie die Bremsschraubenfeder 13 zweistufig ausgebildet sein, so dass in AUF-und AB-Richtung verschiedene Überlastmomente erreicht werden können. Dazu ist es notwendig, dass z.B. die Antriebshülse 25 so ausgebildet ist, dass sie von außen über die Überlastschraubfeder 24 greift.

### Bezugszeichenliste

- 1: Untersetzungsgetriebe
- 2: Gehäuse
- 2₁, 2₂: Gehäusehälfte
- 3₁-3₆: Schraube
- 5: Öffnung
- 6: Zahnrad
- 7: Öffnung
- 8: Innenverzahnung
- 9: Schnecken
- 10: Bremseinheit
- 11: Überlastkupplung
- 12: Bremshülse
- 13: Bremsschraubenfeder
- 14: Bremszylinder
- 15: Ausnehmung (am Bremszylinder 14)
- 16: Vorsprung (an Schnecken 9)
- 17: Ausnehmung (an der Bremshülse 12)
- 18: Vorsprung (am Gehäuse 2)
- 19: Kleiner Außendurchmesser
- 19₁: Kleiner Innendurchmesser
- 20: Erste Fläche (des Bremszylinders 14)
- 21: Großer Außendurchmesser
- 21₁: Großer Innendurchmesser
- 22: Erste Fläche (der Bremshülse 12)
- 23: Zweite Hülse (der Überlastkupplung 11)
- 24: Überlastschraubenfeder
- 25: Antriebshülse

## Patentansprüche

1. Getriebe, insbesondere Untersetzungsgetriebe (1) für Rollläden und dergleichen, das als in einem Sandwich-Gehäuse (2) angeordneten Schneckenrad-oder Kegelradgetriebe ausgebildet und seitlich innen in einem Rollladenkasten angebracht ist und das ferner mit einem eine Bremsschraubenfeder (13) aufweisenden Bremseinheit (10) und einer eine Überlastschraubenfeder (24) aufweisende Überlastrutschkupplung (11) zusammenarbeitet,
**dadurch gekennzeichnet,**
**dass** die Bremsschraubenfeder (13) zwei- oder mehrstufig ausgebildet ist.

2. Getriebe nach Anspruch 1,
**dadurch gekennzeichnet,**
**dass** die Bremsschraubenfeder (13) einen Abschnitt mit großem Außendurchmesser (21) und großem Innendurchmesser (21₁) sowie einen Abschnitt mit kleinem Außendurchmesser (19) und kleinem Innendurchmesser (19₁) aufweist.

3. Getriebe nach Anspruch 2,
**dadurch gekennzeichnet,**
**dass** die Bremseinheit (10) aus einer mit einem Ende der Schnecke oder des Kegelrads (9) kuppelbaren Bremszylinder (14), der auf diesem angeordneten Bremsschraubenfeder (13) und einer mit dem Gehäuse (2) kuppelbaren Bremshülse (12) besteht, wobei eine erste Fläche (20) des Bremszylinders (14) an den kleinen Innendurchmesser (19₁) und eine erste Fläche (22) der Bremshülse (12) an den großen Außendurchmesser (21) angepasst ist.

4. Getriebe nach Anspruch 3,
**dadurch gekennzeichnet,**
**dass** die Kupplung des Bremszylinders (14) mit dem Schnecken- oder Kegelrad (9) aus zwei gegenüberliegenden Vorsprüngen (16) an der Schnecke oder dem Kegelrad (9) und aus zwei gegenüberliegenden Ausnehmungen (15) am Bremszylinder (14) besteht.

5. Getriebe nach Anspruch 3 oder 4,
**dadurch gekennzeichnet,**
**dass** die Kupplung der Bremshülse (12) mit dem Gehäuse (2) aus zwei gegenüberliegenden Vorsprüngen (18) des Gehäuses (2) und zwei gegenüberliegenden Ausnehmungen (17) der Bremshülse (12) besteht.

6. Getriebe nach einem der Ansprüche 1 bis 5,
**dadurch gekennzeichnet,**
**dass** die Überlastkupplung (11) am anderen Ende der Schecke oder dem Kegelrads angeordnet ist.

7. Getriebe nach Anspruch 6,
**dadurch gekennzeichnet,**
**dass** die Überlastkupplung (11) aus einer mit dem anderen Ende der Schnecke oder des Kegelrads (9) kuppelbaren zweiten Hülse (23), der auf dieser Hülse sitzenden Überlastschraubenfeder (24) und einer mit der Überlastschraubenfeder kuppelbaren Antriebshülse (25) besteht, in die eine Handkurbel eingreift.

8. Getriebe nach Anspruch 6 oder 7,
**dadurch gekennzeichnet,**
**dass** die Überlastschraubenfeder wie die Bremsschraubenfeder (13) zweistufig ausgebildet ist.
